# EUROPEAN PATENT APPLICATION

(11) **EP 2 502 739 A1**
(43) Date of publication of application: **26.09.2012**
(21) Application number: 11382081.5
(22) Date of filing: 25.03.2011
(51) Int. Cl.: B31F 1/28, G05B 19/418

(54) **System for controlling the glued status of a single-face layer of a corrugated cardboard sheet in the production line**

(71) Applicant: Sandoval Thiele, Gustavo Eduardo, 08173 Sant Cugat del Valles (ES); Sandoval Thiele, Gustavo, 08348 Cabrils (ES)
(72) Inventor: Sandoval Thiele, Gustavo Eduardo, 08173, Sant Cugat del Valles (ES)
(74) Representative: Ponti Sales, Adelaida

(57) **Abstract**

System (20) for controlling the glued status of a single face layer (4) of a corrugated cardboard sheet (1,1') including a liner paper (2) and a fluting paper (3) glued together by an adhesive (2a), the system (20) comprising gluing sensors (21) of the single face layer (4), a database (22) that stores a series of physical characteristics of the different types of raw material of papers (2,3) and adhesive (2a) of the product to be produced, processing means (23) that calculate the optimal parameters of temperature, quantity of adhesive, stress and pressure depending on the physical characteristics of the product chosen provided by said database (22), temperature measuring sensors (24) of said product throughout the production line, and control means (25) that manage the data from said sensors (21,24), and control regulation devices (26) capable of maintaining levels of said parameters required for a correct gelatinization of the adhesive (2a), in accordance with said optimal parameters according to the type of product, so that the values of said parameters are automatically adjusted at each instant and with each change of raw materials of the product to be produced.

## Description

The present invention relates to a system for controlling the glued status of a single face layer of a corrugated cardboard sheet in the production line.

### BACKGROUND OF THE INVENTION

It is known that a single sheet of corrugated cardboard comprises two outer sheets of paper called "liner" paper and an internal sheet of corrugated paper called "fluting" paper disposed between said sheets of "liner" paper, and glued together by the application of an adhesive.

The manufacturing method of a single sheet of cardboard is carried out in two phases; in a first phase a layer called "single face" is produced consisting of a liner paper and a fluting paper glued together, and in a second phase a liner paper is placed glued on said single face layer.

Starting from a single face layer and adding supplementary single face layers and finally placing an outer layer of liner paper double or triple sheets are obtained.

To produce the corrugated cardboard, which is then turned into raw material for the production of cardboard boxes, a production line called "corrugation line" is used which is described below.

In the corrugation line generally one or two corrugation units are used to produce single face layers.

In this production line, reel stands are used which are fed with paper reels continuously, by means of adapted spools. These splicers are responsible for connecting the reel under production with the following reel when the reel is consumed or when a reel type is changed, whether due to a change in quality of the paper, or a change in width of the paper. This means it is possible to go from manufacturing one type of cardboard to another in accordance with customers' orders without interrupting the production.

In each corrugation unit or also called single face unit, the liner and fluting papers are heated by means of preheated cylinders that use steam at 15 bar and 190°C. The quantity of heat applied is controlled by regulating the area of contact between paper and preheated cylinders. Typically, this regulation is manual, defined by the operator.

The fluting paper is corrugated by means of toothed rollers and an adhesive is later added, based on starch and water. After this operation, the fluting paper comes into contact with the liner paper, and pressure and heat are applied to both papers to allow the water to evaporate from the adhesive, so that said adhesive gelatinizes and achieves a good gluing of the two layers of liner and fluting papers.

The product thus obtained is said single face, which passes to a duplex bridge that acts as a lung to absorb variations in velocity between the different parts of the production line.

After passing through the duplex bridge, the single face layer reaches the triplex and double backer glue unit, consisting of a reel of liner paper by way of an outer cover and two units of gluing rollers, where said single face layer again receives heat and adhesive, and is glued with the other layers that compose the final product, i.e. another single face layer and a liner paper if it is double cardboard or just a liner paper if it is a single cardboard.

To achieve gluing between the different layers, the final product must pass through a hot table where various sections of plates heated with steam are responsible for applying heat to evaporate the water. Pressure is also applied to obtain a good gluing.

The cardboard thus obtained passes through a set of transversal and longitudinal cutters to obtain the end sheets of cardboard, which are stacked by stackers.

To change from one type of cardboard to another the types of papers used must be changed, so that when the cardboard reaches the cutters it goes from one paper to another in the least amount of metres possible to reduce the non-conforming product. This entails that the paper splices and, therefore, the reel type changes must be carried out in a scheduled form knowing the quantities of product in each area of the production line, determined by the lungs or duplex bridges existing in the lines.

This has great implications on the process quality and productivity, since each paper type change entails that the physical properties of the raw material (such as heat capacity, porosity, density, roughness, etc.) are different, for which reason the adjustments of the manufacturing parameters must be completely different. If this is not performed in this manner, a great quantity of non-performing product is produced, due to problems of gluing, warping, etc.

The sheets produced by the corrugation line are stored in an intermediate warehouse until they are passed to the transformation area where there are several process lines in charge of die-cutting, printing and folding until achieving the final product. The loss or waste produced in this area is the most expensive and is determined by the quality of the sheet, i.e. flatness, suitable humidity and structural resistance, and the typical problems of converting machines, such as the poor adjustment of colours, stencils or die-cutting templates, jamming, etc.

Currently, quality control is carried out manually, wherein the operator takes a box randomly to check if it corresponds to the specifications, which causes a great amount of defects to be detected by the end customer, generating complaints and returns.

At present, there is no non-destructive method to measure in line the quality of the gluing between the two papers composing the single face layer.

This increases the quantity of non-conforming product with the subsequent economic cost since the gluing defects are detected, if they are lucky, at the end of the process after the passage of the cardboard through the cutters if the operator observes the unsticking. Therefore, it is necessary that the magnitude of the unsticking is considerable so that it can be observed just by looking at them. Otherwise, if it is an isolated effect or repetitive but with small magnitude, for example paper bags or bubbles not gluing correctly, the defect may reach the converting machines or even the end customer.

For a correct gluing between the fluting and liner papers of the single face layer, it is necessary that each paper has a required temperature and humidity, and that the glue (adhesive based on starch and water) has a required viscosity and temperature, so that depending on the absorption properties of each paper, the quantity of glue necessary for the gluing penetrates as required in the two layers of paper.

Once in contact, pressure is applied to the two papers, in this phase the heat transported by the papers must allow the correct gelatinization of the starch evaporating at the same time the excess water so that the glue solidifies, creating a resistant bond between the fluting paper and the liner.

In consequence, the factors affecting the correct gluing are described below:
- Physical characteristics of the papers: porosity, humidity, heat capacity, density, roughness, etc., which defines the absorption capacity and quantity of glue taken by each paper.
- Physical characteristics of the glue or adhesive: density, temperature, gelatinization temperature, viscosity, PH, etc.
- Process characteristics: velocity of the corrugation line machine, contact pressure, stress of the papers, quantity and uniformity of heat applied, quantity and uniformity of glue applied.

With current technology in the corrugation units it is not possible to know or control the quantity of glue applied precisely. In the production line machine, an indirect variable is regulated which is the glue with which the glue applicator roller works, but this cannot be translated into grams/m² of glue taken by the paper, for which reason it is not possible to know in line if it is working with the appropriate quantity of glue, nor if the uniformity of the glue throughout the width of the paper is good. If there is no uniformity, the quality of the gluing will be compromised.

Nowadays, no system or application is known that takes these factors into consideration and which includes a direct measurement of the uniformity and quality of the gluing between the two layers of paper.

Patent application US 5663565 A discloses a system comprising measuring means of the correct application of the glue line in the peak areas of the corrugated cardboard. However, the data measured by this system cannot be correlated with the final quality of the gluing that will depend on the absorption capacity of glue, humidity and temperature of the other paper to join, as well as of the stress and pressure applied by the production line machine.

### DESCRIPTION OF THE INVENTION

The objective of the system for controlling the glued status of a single face layer of a corrugated cardboard sheet in the production line of the present invention is to resolve the drawbacks that the systems known in the state of the art present, providing a totally automated gluing control system that makes it possible to obtain the uniformity and quality required of the gluing of the single face layers produced.

The system for controlling the glued status of a single face layer of a corrugated cardboard sheet in the production line of the present invention, wherein said single face layer includes a liner paper and a fluting paper glued together by an adhesive, is characterized in that it comprises gluing sensors of the single face layer, a database that stores a series of physical characteristics of the different types of raw material of papers and adhesive of the product to be produced, processing means that calculate the optimal parameters of temperature, quantity of adhesive, stress and pressure depending on the physical characteristics of the product chosen provided by said database, temperature measuring sensors of said product throughout the production line, and control means that manage the data from said gluing sensors and from said temperature measuring sensors, and control regulation devices capable of maintaining levels of temperature, quantity of adhesive, stress and pressure required for a correct gelatinization of the adhesive, in accordance with the optimal parameters calculated by said processing means according to the type of product, so that said values of temperature, quantity of adhesive, stress and pressure required are automatically adjusted at each instant and with each change of raw materials of the product to be produced, thus obtaining a correct gluing of the single face layer.

In this way, the system of the invention is based on the calculation of the optimal working parameters according to the product characteristics, since each raw material that composes the single face layer has very different physical behaviours, such as heat transmission capacity, porosity, etc. which defines its temperature, humidity, adhesive absorption, etc.

Therefore, the system is capable of predicting the suitable values for heat application, quantity of adhesive, etc. For this purpose, the system incorporates said database of the products used, wherein each product is characterized from the physical properties that have most influence in the gluing.

Thanks to the temperature sensors, it is possible to measure and control the correct temperature of the papers at each instant.

The regulating devices that collect the measurement of these temperature sensors make it possible to maintain temperature levels required by each product to guarantee the correct gelatinization of the adhesive, whilst minimizing energy consumption.

Another advantage is that the system makes it possible to memorize the quality obtained from each paper supplier and the process parameters helping in the selection process of suppliers and raw materials as well as in the product design. This is achieved on correlating gluing problems with the use of a certain paper or the combination of incompatible papers.

According to an embodiment of the invention, the gluing sensors are based on a capacitive technology, being capable of measuring throughout the width of the single face layer its profile of dielectric capacity, immediately after the point of pressure application.

The dielectric capacity is defined by the absorption capacity of the paper, the quantity of adhesive and the quantity of air between the layers that compose the product to be produced. This makes it possible to detect areas with incorrect application of adhesive or when the adhesive application is insufficient throughout the width.

Advantageously the control means include a master regulation loop to manage the set of regulation devices. This regulation loop manages the whole network of system regulators, bearing in mind the process's physical relations, so that all variables adjust to the requirements at each instant and performing the suitable actions to guarantee a correct gluing between the fluting and liner papers.

Preferably, the control means are capable of electronically linking with laboratory test results to keep said database of raw materials and physical characteristics updated.

Alternatively, the system comprises a control unit equipped with an interface and a display screen to manage the control means by means of a user.

Preferably, the transmission of the system data is performed by a real-time Ethernet connection with the computer network of the production plant.

### BRIEF DESCRIPTION OF THE DRAWINGS

In order to facilitate the description of the aforementioned, drawings are attached wherein, schematically and by way of non-limiting example, a practical case of embodiment is represented of the system for controlling the glued status of a single face layer of a corrugated cardboard sheet in the production line of the invention, wherein:
figure 1 is a schematic view of the conventional manufacturing process of a single sheet of corrugated cardboard;
figure 2 is a schematic view of a conventional production line or corrugation line of the sheet of corrugated cardboard;
figure 3 is a partial schematic view of a conventional corrugation unit for the manufacturing of a single face layer;
figure 4 is a schematic view of the gluing process of the single face layers and of the production of the end sheet;
figure 5 is a schematic view of a corrugation unit showing the measuring sensors of the gluing control system of the present invention; and
figure 6 is a block diagram of the gluing control system of the present invention.

### DESCRIPTION OF A PREFERRED EMBODIMENT

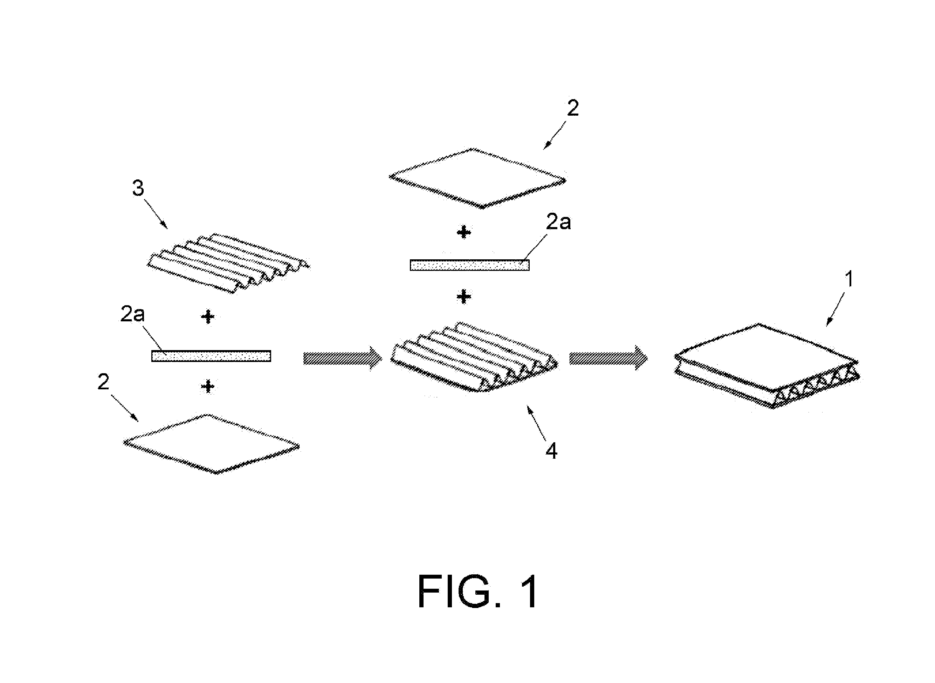

Making reference to figure 1, a single sheet of corrugated cardboard 1 comprises two outer paper sheets 2 called "liner" paper and an inner sheet of corrugated paper 3 called "fluting" paper disposed between said sheets of "liner" paper 2, and glued together by the application of an adhesive or glue 2a.

The manufacturing method of a single sheet of cardboard 1 is carried out in two phases; in a first phase a layer 4 called "single face" is produced consisting of a liner paper 2 and a fluting paper 3 glued together, and in a second phase a liner paper 2 is placed glued on said single face layer 4.

Starting from a single face layer 4 and adding supplementary single face layers 4 and finally placing an outer layer of liner paper 2 double or triple sheets are obtained.

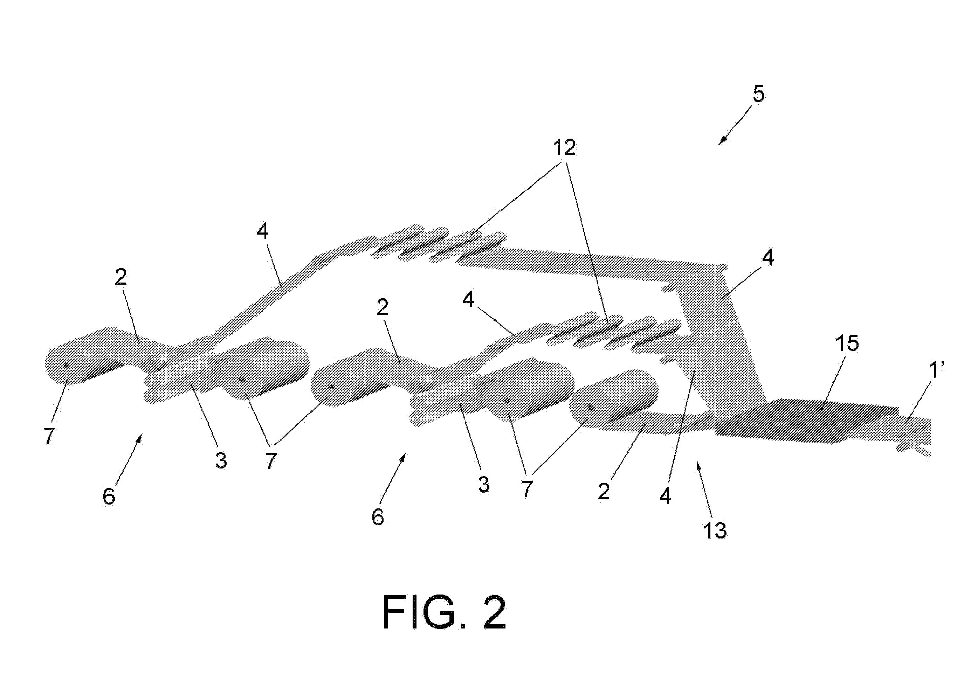

As can be observed in figure 2, to produce the corrugated cardboard, which is then turned into raw material for the production of cardboard boxes, a production line 5 called "corrugation line" is used, generally comprising one or two corrugation units 6 for the production of the single face layers 4.

In this corrugation line 5, reel stands are used which are fed with paper reels 7 continuously, by means of adapted spools. These splicers are responsible for connecting the reel under production with the following reel when the reel is consumed or when a reel type is changed, whether due to a change in quality of the paper, or a change in width of the paper. This means it is possible to go from manufacturing one type of cardboard 1 to another in accordance with customers' orders without interrupting the production.

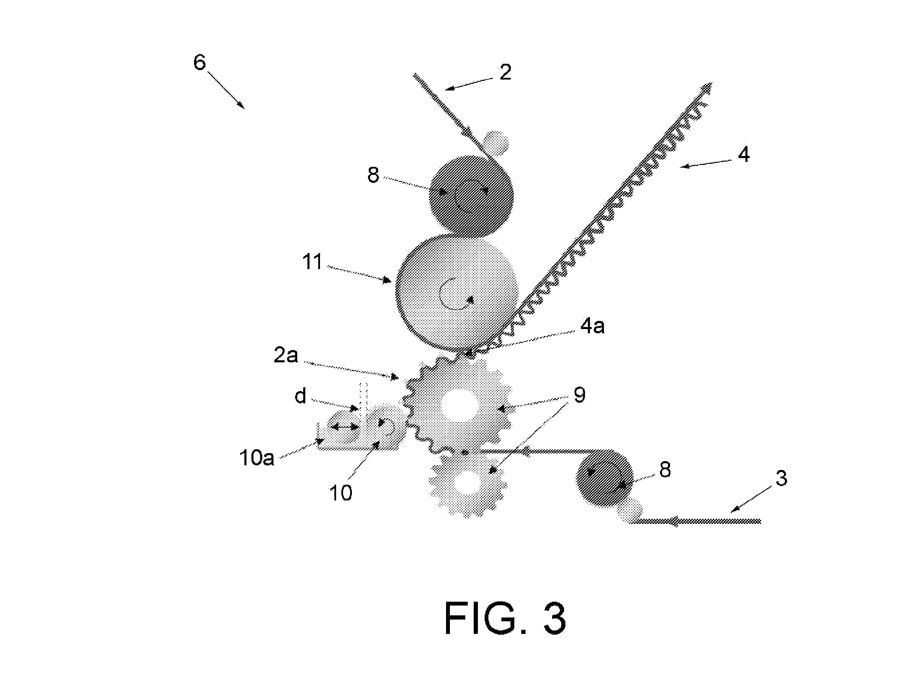

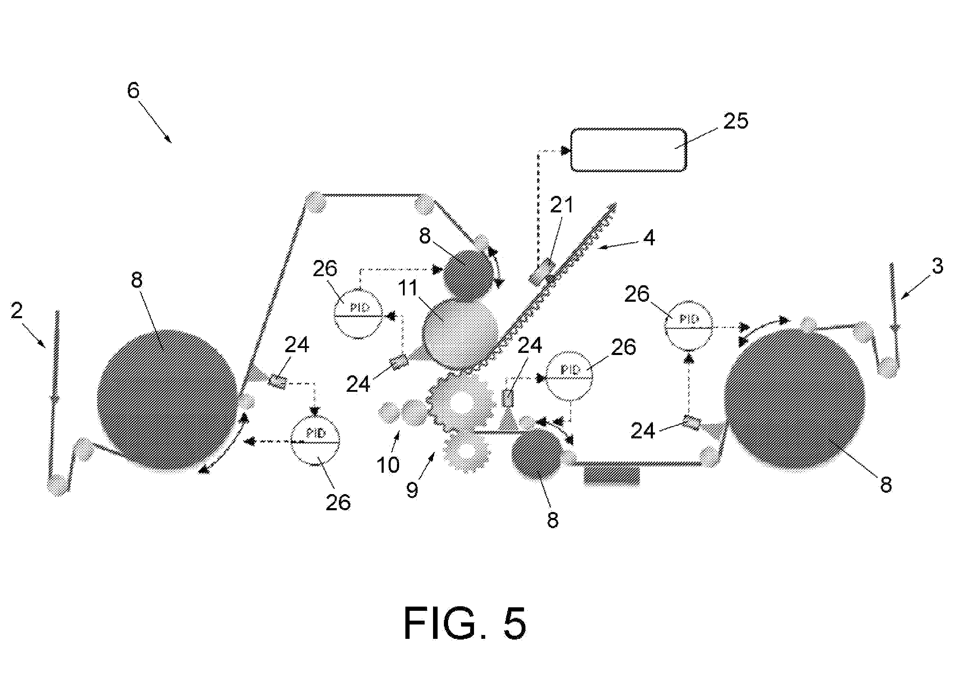

Making reference to figures 3 and 5, in each corrugation unit 6 or also called single face unit, the liner 2 and fluting 3 papers are heated by means of preheated cylinders 8 that use steam at 15 bar and 190 °C. The quantity of heat applied is controlled by regulating the area of contact between paper 2,3 and preheated cylinders 8.

The fluting paper 3 is corrugated by means of toothed rollers 9 and an adhesive or glue 2a is later added, based on starch and water, by gluing rollers 10 housed in a tray 10a equipped with glue that provide a line of glue 2a with a predetermined thickness "d". After this operation, the fluting paper 3 comes into contact with the liner paper 2, and pressure and heat are applied to both papers 2,3 by a press roller 11 to allow the water to evaporate from the adhesive, so that said adhesive gelatinizes and achieves a good gluing of the two layers of liner 2 and fluting 3 papers. The product thus obtained is said single face 4.

Said single face layer 4 passes to a duplex bridge 12 that acts as a lung to absorb variations in velocity between the different parts of the production line 5 (see figure 2).

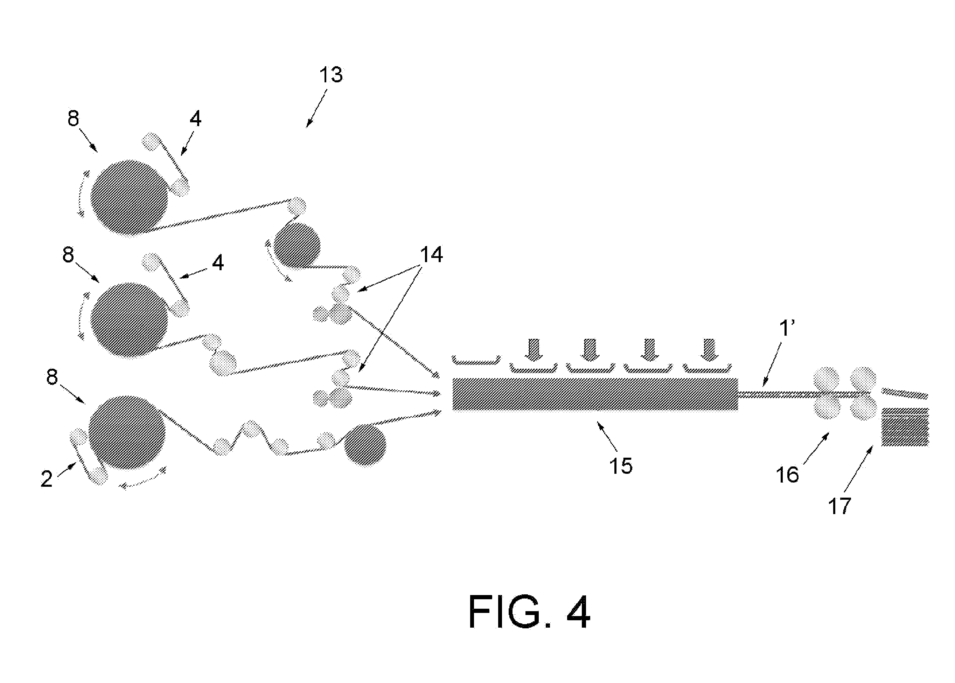

As can be observed in figure 4, after passing through the duplex bridge 12, the single face layer 4 reaches the triplex and double backer glue unit 13, consisting of a reel of liner paper 2 by way of an outer cover and two units of gluing rollers 14. In this phase, the single face layer 4 again receives heat by preheated rollers 8 and adhesive by the gluing rollers 14, and is glued with the other layers that compose the final product, i.e. another single face layer 4 and a liner paper 2 if it is double cardboard 1' (as shown in figures 2 and 4) or just a liner paper 2 if it is a single cardboard 1 (see figure 1).

To achieve gluing between the different layers, the final product must pass through a hot table 15 where various sections of plates heated with steam are responsible for applying heat to evaporate the water. Pressure is also applied to obtain a good gluing.

The cardboard thus obtained passes through a set of transversal and longitudinal cutters 16 to obtain the end sheets of cardboard 1', which are stacked by stackers 17.

The sheets produced by the corrugation line are stored in an intermediate warehouse until they pass to the transformation area where there are several process lines in charge of die-cutting, printing and folding until achieving the final product.

Below, the system 20 for controlling the glued status of a single face layer 4 of a corrugated cardboard sheet 1,1' in the production line 5 is described.

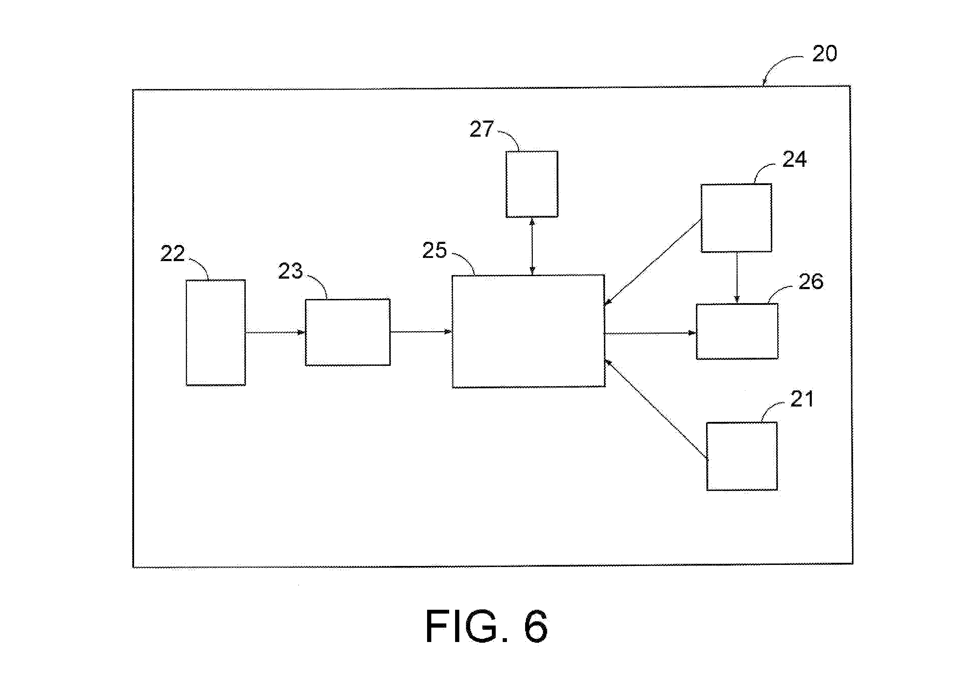

Making reference to figures 5 and 6, the system 20 for controlling the glued status of a single face layer 4 of a corrugated cardboard sheet 1,1' in the production line 5 comprises:
- gluing sensors 21,
- a database 22 that stores a series of physical characteristics of the different types of raw material of papers 2,3 and adhesive 2a of the product to be produced,
- processing means 23 that calculate the optimal parameters of temperature, quantity of adhesive, stress and pressure depending on the physical characteristics of the product chosen provided by said database 22,
- temperature measuring sensors 24 of said product throughout the production line, and
- control means 25 that manage the data from said gluing sensors 21 and from said temperature measuring sensors 24, and control regulation devices 26 capable of maintaining levels of temperature, quantity of adhesive, stress and pressure required for a correct gelatinization of the adhesive 2a, in accordance with the optimal parameters calculated by said processing means 23 according to the type of product, so that said values of temperature, quantity of adhesive, stress and pressure required are automatically adjusted at each instant and with each change of raw materials of the product to be produced, thus obtaining a correct gluing of the sheet of corrugated cardboard 1,1'.

In this way, the system 20 of the invention is based on the calculation of the optimal working parameters according to the product characteristics, since each raw material (paper) that composes the single face layer 4 has very different physical behaviours, such as heat transmission capacity, porosity, etc. which defines its temperature, humidity, adhesive absorption, etc.

Therefore, the system is capable of predicting the suitable values for heat application, quantity of adhesive, etc. For this purpose, the system incorporates said database 22 of the products used, wherein each product is characterized from the physical properties that have most influence in the gluing.

Thanks to the temperature sensors 24, it is possible to measure and control the correct temperature of the papers 2,3 at each instant.

The regulating devices 26 that collect the measurement of these sensors 24 make it possible to maintain temperature levels required by each product to guarantee the correct gelatinization of the adhesive 2a, whilst minimizing energy consumption.

The gluing sensors 21 are based on a capacitive technology. Each gluing sensor 21 makes it possible to measure throughout the width of the single face layer 4 its profile of dielectric capacity, immediately after the point of pressure application 4a (see figure 3).

The dielectric capacity is defined by the absorption capacity of the paper, the quantity of adhesive and the quantity of air between the layers that compose the product to be produced. This makes it possible to detect areas with incorrect application of adhesive or when the adhesive application is insufficient throughout the width.

The control means 25 include a master regulation loop to manage the set of regulation devices 26. This regulation loop manages the whole network of system regulators 26, bearing in mind the process's physical relations, so that all variables adjust to the requirements at each instant and performing the suitable actions to guarantee a correct gluing between the fluting 3 and liner 2 papers.

The control means 25 are capable of electronically linking with laboratory test results to keep said database 22 of raw materials and physical characteristics updated.

The system 20 also comprises a control unit 27 equipped with an interface and a display screen to manage the control means 25 by means of a user.

The transmission of the system data 20 is performed by a real-time Ethernet connection with the computer network of the production plant.

## Claims

1. System (20) for controlling the glued status of a single face layer (4) of a corrugated cardboard sheet (1,1') in the production line (5), wherein said single face layer (4) includes a liner paper (2) and a fluting paper (3) glued together by an adhesive (2a), **characterized in that** it comprises gluing sensors (21) of the single face layer (4), a database (22) that stores a series of physical characteristics of the different types of raw material of papers (2,3) and adhesive (2a) of the product to be produced, processing means (23) that calculate the optimal parameters of temperature, quantity of adhesive, stress and pressure depending on the physical characteristics of the product chosen provided by said database (22), temperature measuring sensors (24) of said product throughout the production line, and control means (25) that manage the data from said gluing sensors (21) and from said temperature measuring sensors (24), and control regulation devices (26) capable of maintaining levels of temperature, quantity of adhesive, stress and pressure required for a correct gelatinization of the adhesive (2a), in accordance with the optimal parameters calculated by said processing means (23) according to the type of product, so that said values of temperature, quantity of adhesive, stress and pressure required are automatically adjusted at each instant and with each change of raw materials of the product to be produced, thus obtaining a correct gluing of the single face layer (4).

2. System (20), according to claim 1, wherein the gluing sensors (21) are based on a capacitive technology, being capable of measuring throughout the width of the single face layer (4) its profile of dielectric capacity immediately after the pressure application point (4a).

3. System (20), according to claim 1, wherein the control means (25) include a master regulation loop to manage the set of regulation devices (26).

4. System (20), according to claim 1, wherein the control means (25) are capable of electronically linking with laboratory test results to keep said database (22) of raw materials and physical characteristics updated.

5. System (20), according to claim 1, comprising a control unit (27) equipped with an interface and a display screen to manage the control means (25) by a user.

6. System (20), according to claim 1, wherein the transmission of the system data is performed by a real-time Ethernet connection with the computer network of the production plant.
